# EUROPÄISCHE PATENTSCHRIFT

(11) **EP 0 964 188 B1**
(45) Veröffentlichungstag und Bekanntmachung des Hinweises auf die Patenterteilung: **08.09.2004**
(21) Anmeldenummer: 99110843.2
(22) Anmeldetag: 07.06.1999
(51) Int. Cl.: F16J 3/04

(54) **Faltenbalg**
Bellow
Soufflet d'étanchéité

(30) Priorität: 12.06.1998 DE 19826344
(43) Veröffentlichungstag der Anmeldung: 15.12.1999
(73) Patentinhaber: ContiTech Vibration Control GmbH, 30165 Hannover (DE)
(72) Erfinder: Lörke, Urs, 30167 Hannover (DE); Liebich, Charl, 29451 Dannenberg (DE)
(74) Vertreter: Schneider, Egon

(56) Entgegenhaltungen:
- EP-A- 0 299 850
- EP-A- 0 375 873
- EP-A- 0 669 475

## Beschreibung

Die Erfindung betrifft einen durch Blasformung eines schlauchförmigen Rohlings aus thermoplastischem Kunststoff gebildeten Faltenbalg gemäß dem Oberbegriff des Patentanspruchs 1.

Ein derartiger Faltenbalg ist beispielsweise aus der EP 0 299 850 B1 bekannt, hat sich jedoch in der Praxis nicht bewährt, da die Innenbefestigung, für die der in die Ausnehmung eines Schlauchstutzens einsteckbare Befestigungsbund des Balges ausgelegt war, wegen zu geringer erzielbarer Haltekräfte nicht sicher genug war, so daß sich der Balg zu leicht vom Anschlußstutzen lösen konnte. Dieser Nachteil wurde zwar bei einer in der EP 0 375 873 A2 beschriebenen Balginnenbefestigung vermieden; die damit erzielbare Befestigungssicherheit beruhte jedoch auf der Verwendung eines zusätzlichen Bauteils in Form eines den Balgbund von innen gegenüber der Stutzeninnenwandung haltenden Stützringes.

Der vorliegenden Erfindung liegt die Aufgabe zugrunde, einen Faltenbalg zu schaffen, dessen Befestigungsbund eine sichere Innenbefestigung in einem Anschlußstutzen nur durch konstruktive Gestaltung ohne jeglichen zusätzlichen Aufwand ermöglicht.

Zur Lösung dieser Aufgabe wird erfindungsgemäß ein Faltenbalg der eingangs genannten, dem Oberbegriff des Patentanspruchs 1 entsprechenden Art vorgeschlagen, der die im kennzeichnenden Teil des Patentanspruchs 1 angegebenen Merkmale aufweist. Den Unteransprüchen sind vorteilhafte Ausführungsformen und Weiterbildungen der Erfindung zu entnehmen.

Da sich bei den bekannten Faltenbälgen gezeigt hatte, daß eine sichere Innenbefestigung eine hohe radiale Stabilität des Balgbundes gegenüber der Innenwandung des Anschlußstutzens und der an dieser nach innen vorspringenden Rastkante voraussetzt, löst die vorliegende Erfindung die gestellte Aufgabe, indem sie die Formsteifigkeit des balgseitigen, als ringsumlaufende, radial nach außen gerichtete Rastnase ausgebildeten Rastelementes vergrößert; und zwar wird dies nicht etwa durch Erhöhung der Wandstärke des Befestigungsbundes realisiert, sondern dadurch, daß unmittelbar benachbart zu der als umlaufende radial nach außen gerichtete Ausformung der Balgwandung ausgebildete Rastnase des Befestigungsbundes mindestens eine radial nach innen gerichtete Einformung in Form einer axial schmalen Ringnut vorgesehen ist, deren in Radialebenen umlaufende Seitenwände der Bundwandung eine erheblich erhöhte Radialsteifigkeit verleihen.

Vorzugsweise ist beiderseits der umlaufenden Rastnase unmittelbar neben dieser je eine derartige die Formsteifigkeit des Befestigungsbundes und insbesondere der Rastnase erhöhende umlaufende Ringnut vorgesehen, wobei deren radiale Tiefe vorteilhaft größer - und zwar vorzugsweise mindestens doppelt so groß - als ihre axiale Breite ist. Die radiale Tiefe der Ringnuten ist zweckmäßig mindestens gleich der Wandstärke des Befestigungsbundes.

Bezüglich der Anordnung und Gestaltung der besagten Ringnuten haben sich folgende Ausführungsformen besonders bewährt:

Eine umlaufende Ringnut, die an der dem freien Ende des Befestigungsbundes zugewandten Seite der Rastnase unmittelbar neben dieser umläuft, ist so gestaltet, daß diejenige ihrer Seitenwände, die dem freien Bundende abgewandt verläuft, mit der dem freien Bundende zugewandten Seitenwand der Rastnase zusammenfällt; d.h. diese Seitenwand ist gemeinsamer Bestandteil der Rastnase und der besagten Ringnut. Ferner ist es vorteilhaft, den Befestigungsbund zwischen dieser Ringnut und dem freien Bundende kegelmantelförmig - also sich verjüngend - auszubilden, so daß er das Einstecken des Befestigungsbundes in die Ausnehmung des zugehörigen Befestigungsstutzens nach Art einer Aufschubrampe erleichtert.

Eine weitere umlaufende Ringnut ist an der dem freien Ende des Befestigungsbundes abgewandten Seite der Rastnase vorteilhaft so angeordnet, daß sie - ausgehend vom Fußbereich der Rastnase, bis zu dem sich im montierten Zustand des Faltenbalges die radial nach innen vorspringende Rastkante des Anschlußstutzens erstreckt - radial in Richtung der Balgachse eingeformt ist.

Vorzugsweise entspricht die Außenkontur des Befestigungsbundes an dem besagten Fußbereich der Rastnase der Innenkontur der die Rastnase hier im montierten Zustand des Balges hintergreifenden Rastkante des Anschlußstutzens, so daß eine formschlüssige Verklammerung resultiert. Ferner ist es zweckmäßig, den Außendurchmesser der Rastnase geringfügig größer als die lichte Weite der Ausnehmung des zugehörigen Anschlußstutzens auszubilden, so daß die Rastnase bei der Montage unter radialer Vorspannung hinter der Rastkante des Anschlußstutzens an dessen Innenwandung zur Anlage kommt.

Die beigefügte Zeichnung veranschaulicht die vorliegende Erfindung anhand von Ausführungsbeispielen, und zwar zeigen Fig. 1a und Fig. 1b den Endbereich eines erfindungsgemäßen Faltenbalges zusammen mit einem zugehörigen Anschlußstutzen separat bzw. in montiertem Zustand, während Fig. 2 denselben Befestigungsbund und Fig. 3 eine abgewandelte Ausführungsform in vergrößertem Maßstab wiedergibt.

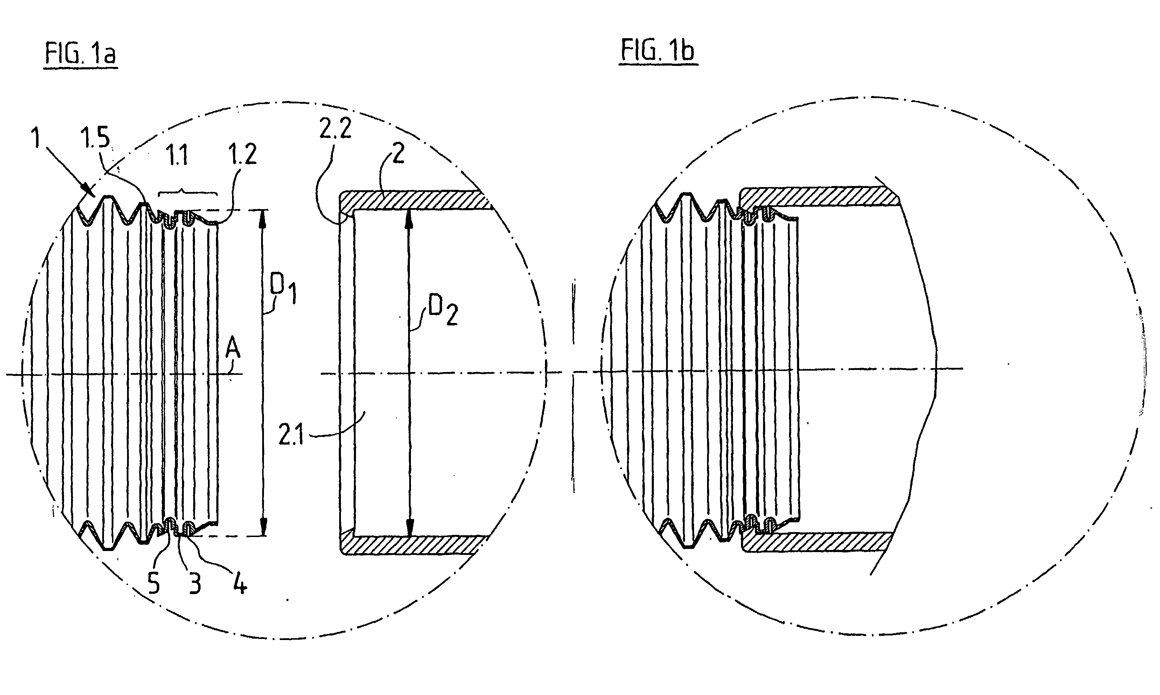

Wie Fig. 1a zeigt, ist mindestens das eine axiale Ende eines erfindungsgemäßen Faltenbalges 1 mit einem Befestigungsbund 1.1 ausgebildet, der sich vom freien Ende 1.2 in Richtung der ersten Falte 1.5 des Faltenbereiches des Balges erstreckt und in eine entsprechende Ausnehmung 2.1 eines Anschlußstutzens 2 einsteckbar und in dieser fixierbar ist. Dieser Befestigungsbund weist eine an sich bekannte umlaufende Rastnase 3 auf, die durch radiale von innen nach außen gerichtete Ausformung der Balgwandung erzeugt ist und im axialen Längsschnitt annähernd U-förmig mit etwa radial ausgerichteten Schenkeln ausgebildet ist. Beiderseits unmittelbar benachbart zur Rastnase 3 ist je eine umlaufende Ringnut etwa radial von außen nach innen in die Bundwandung eingeformt, und zwar auf der dem freien Ende 1.2 des Befestigungsbundes zugewandten Seite der Rastnase 3 so, daß die betreffende Stirnwand 3.1 der Rastnase 3 insgesamt mit der ihr zugewandten Wand 4.1 der Ringnut 4 zusammenfällt und daß auf der anderen Seite der Rastnase 3 die dort umlaufende Ringnut 5 so angeordnet ist, daß sie sich erst unterhalb des Fußbereichs 3.2 der Rastnase 3 etwa radial von außen nach innen erstreckt.

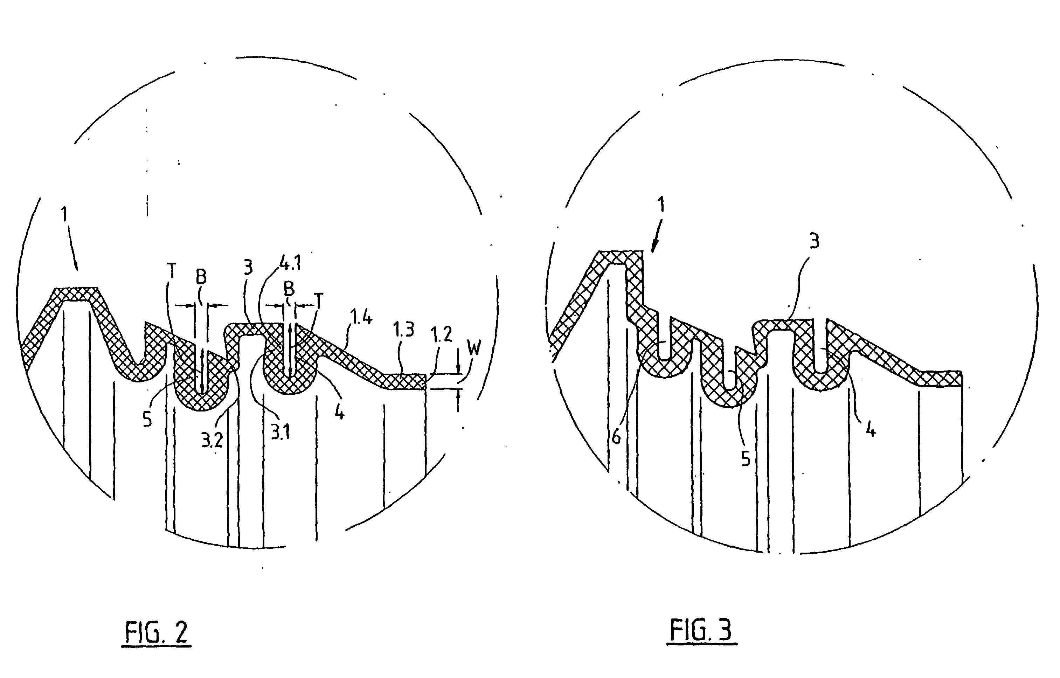

Der Endbereich des Befestigungsbundes 1.1 zwischen der Ringnut 4 und dem freien Bundende 1.2 ist als eine sich radial verjüngende kegelmantelförmige Aufschubrampe 1.4 geformt, so daß er sich leicht gleitend über die Rastkante 2.2 in die zylindrische Ausnehmung 2.1 des zugehörigen Anschlußstutzens 2 einführen läßt. Der Befestigungsbund wird dann so weit in die Ausnehmung 2.1 hineingeschoben, daß die Rastkante 2.2 die Rastnase 3 hintergreift und bis zum Fußbereich 3.2 (siehe Figur 2) oberhalb der Ringnut 5 - vorzugsweise formschlüssig - einrastet, wie in Figur 1 b dargestellt. Eine weitere Ringnut 6 kann beispielsweise anschließend an die Ringnut 5 vorgesehen sein (Fig. 3).

Die praktische Anwendung der vorliegenden Erfindung hat gezeigt, daß sich damit erstaunlich hohe Haltekräfte erzielen lassen, die bisher nur dadurch erreicht werden konnten, daß man die zusätzliche Verwendung von Stützringen oder anderen zusätzlichen Befestigungsmitteln und deren zusätzlichen Montageaufwand in Kauf nahm.

In bevorzugten Ausführungsformen der vorliegenden Erfindung werden optimale Haltekräfte der Befestigungsbunde erfindungsgemäßer Faltenbälge - wie auch in der Zeichnung erkennbar - dadurch erzielt, daß die radiale Tiefe T der Ringnuten 4, 5, 6 größer - insbesondere mehr als doppelt so groß - als ihre axiale Breite B und größer als die Wandstärke W der Bundwandung 1.3 ist.

Eine weitere vorteilhafte Ausgestaltung der vorliegenden Erfindung besteht darin, daß der Außendurchmesser D₁ der Rastnase 3 vor der Montage des Faltenbalges (Fig. 1a) geringfügig größer ist als die leichte Weite D₂ der Ausnehmung 2.1 des Anschlußstutzens 2. Dies hat zur Folge, daß die Rastnase 3 nach der Montage (Fig. 1b) unter Vorspannung in die Ausnehmung 2.1 des Anschlußstutzens 2 eingreift, wodurch die Fixierung der Rastnase 3 verstärkt und ihre Abdichtungswirkung verbessert wird.

## Patentansprüche

1. Durch Blasformung eines schlauchförmigen Rohlings aus thermoplastischem Kunststoff gebildeter Faltenbalg (1), der an mindestens einem seiner axialen Enden einen in eine zylindrische Ausnehmung (2.1) eines Anschlußstutzens (2) fromschlüssig einsteckbaren und in dieser von innen her verrastbaren Befestigungsbund (1.1) aufweist, wobei an den Befestigungsbund (1.1) mindestens eine radial nach außen gerichtete Rastnase (3) so angeformt ist, daß sie mit einer an der Innenwand der Ausnehmung (2.1) angeordneten radial nach innen vorspringenden Rastkante (2.2) zusammenwirkten kann,
**dadurch gekennzeichnet,**
**daß** die Rastnase (3) als umlaufende, radial nach außen gerichtete, im axialen Längsschnitt etwa U-förmige Ausformung der Bundwandung (1.3) mit annähernd radial verlaufenden Seitenwänden gebildet ist und daß zu ihr parallel, unmittelbar benachbart mindestens eine umlaufende etwa radial von außen nach innen in die Bundwandung (1.3) eingeformte, axial schmale Ringnut (4, 5, 6) angeordnet ist.

2. Faltenbalg nach Anspruch 1, **dadurch gekennzeichnet, daß** die radiale Tiefe (T) der Ringnut(en) (4, 5, 6) größer als ihre axiale Breite (B) ist.

3. Faltenbalg nach Anspruch 2, **dadurch gekennzeichnet, daß** die radiale Tiefe (T) der Ringnut(en) (4, 5, 6) mindestens doppelt so groß wie ihre axiale Breite (B) ist.

4. Faltenbalg nach einem der Ansprüche 1 bis 3, **dadurch gekennzeichnet, daß** die radiale Tiefe (T) der Ringnut(en) (4, 5, 6) mindestens gleich der Wandstärke (W) der Bundwandung (1.3) ist.

5. Faltenbalg nach einem der Ansprüche 1 bis 4, **dadurch gekennzeichnet, daß** an der dem freien Ende (1.2) des Befestigungsbundes (1.1) zugewandten Seite der Rastnase (3) eine umlaufende Ringnut (4) so angeordnet ist, daß ihre dem freien Bundende (1.2) abgewandte Seitenwand (4.1) mit der dem freien Bundende (1.2) zugewandten Seitenwand (3.1) der Rastnase (3) zusammenfällt.

6. Faltenbalg nach einem der Ansprüche 1 bis 5, **dadurch gekennzeichnet, daß** sich der Befestigungsbund (1.1) zwischen der umlaufenden Ringnut (4) und dem freien Bundende (1.2) - eine kegelmantelförmige Aufschubrampe (1.4) bildend - radial verjüngt.

7. Faltenbalg nach einem der Ansprüche 1 bis 6, **dadurch gekennzeichnet, daß** an der dem freien Ende (1.2) des Befestigungsbundes (1.1) abgewandten Seite der Rastnase (3) eine umlaufende Ringnut (5) so angeordnet ist, daß sie sich vom Fußbereich (3.2) der Rastnase (3) radial nach innen erstreckt.

8. Faltenbalg nach einem der Ansprüche 1 bis 7, **dadurch gekennzeichnet, daß** die Außenkontur des Befestigungsbundes (1.1) am Fußbereich (3.2) der Rastnase (3) der Innenkontur der Rastkante (2.2) des Anschlußstutzens (2) entspricht.

9. Anschlußstutzen mit einem in diesen einsteckbaren Faltenbalg nach einem der Ansprüche 1 bis 8, **dadurch gekennzeichnet, daß** der Außendurchmesser (D₁) der Rastnase (3) geringfügig größer ist als die lichte Weite (D₂) der Ausnehmung (2.1) des Anschlußstutzens (2).

## Claims

1. Expansion bellows (1) formed by blow moulding a tubular blank made of thermoplastic plastic material, said bellows having, on at least one of the axial ends thereof, an attachment collar (1.1), which can be inserted in a form-fitting manner into a cylindrical recess (2.1) of a connection piece (2) and can be locked in said recess from the inside, at least one radially outwardly directed locking projection (3) being moulded on the attachment collar (1.1) such that said locking projection can cooperate with a radially inwardly projecting locking edge (2.2) which is disposed on the inner wall of the recess (2.1),
***characterised in that***
the locking projection (3) is formed as a circumferential, radially outwardly directed shaping of the collar wall (1.3) which is approximately U-shaped in axial longitudinal section and has approximately radially extending side walls, and **in that**, parallel and directly adjacent thereto, at least one circumferential annular groove (4, 5, 6) is disposed which is approximately radially formed from the outside to the inside in the collar wall (1.3) and is axially narrow.

2. Expansion bellows according to claim 1, **characterised in that** the radial depth (T) of the annular groove(s) (4, 5, 6) is larger than its axial width (B).

3. Expansion bellows according to claim 2, **characterised in that** the radial depth (T) of the annular groove(s) (4, 5, 6) is at least twice as large as its axial width (B).

4. Expansion bellows according to one of the claims 1 to 3, **characterised in that** the radial depth (T) of the annular groove(s) (4, 5, 6) is at least equal to the wall thickness (W) of the collar wall (1.3).

5. Expansion bellows according to one of the claims 1 to 4, **characterised in that**, on the side of the locking projection (3), which is orientated towards the free end (1.2) of the attachment collar (1.1), a circumferential annular groove (4) is disposed such that its side wall (4.1), which is orientated away from the free collar end (1.2), coincides with the side wall (3.1) of the locking projection (3) which is orientated towards the free collar end (1.2).

6. Expansion bellows according to one of the claims 1 to 5, **characterised in that** the attachment collar (1.1) radially tapers - forming a cone envelope-shaped slip-on ramp (1.4) - between the circumferential annular groove (4) and the free collar end (1.2).

7. Expansion bellows according to one of the claims 1 to 6, **characterised in that**, on the side of the locking projection (3), which is orientated away from the free end (1.2) of the attachment collar (1.1), a circumferential annular groove (5) is disposed such that it extends radially inwardly from the foot region (3.2) of the locking projection (3).

8. Expansion bellows according to one of the claims 1 to 7, **characterised in that** the outer contour of the attachment collar (1.1) at the foot region (3.2) of the locking projection (3) corresponds to the inner contour of the locking edge (2.2) of the connection piece (2).

9. Connection piece having an expansion bellows which can be inserted therein, according to one of the claims 1 to 8, **characterised in that** the outer diameter (D₁) of the locking projection (3) is slightly larger than the inner diameter (D₂) of the recess (2.1) of the connection piece (2).

## Revendications

1. Soufflet (1) réalisé par soufflage d'une pièce brute de matière synthétique thermoplastique en forme de tube, comportant un collet de fixation (1.1) à l'une de ses extrémité axiales au moins, ledit collet pouvant être emboîté par complémentarité de forme dans un dégagement cylindrique (2.1) d'un raccord (2) et enclenché dans ledit dégagement depuis l'intérieur, dans lequel un nez d'arrêt (3) au moins, dirigé de manière radiale vers l'extérieur, est formé sur le collet de fixation (1.1), de telle sorte qu'il peut coopérer avec un bord d'arrêt (2.2) disposé sur la paroi intérieure du dégagement (2.1) et faisant saillie de manière radiale vers l'intérieur, **caractérisé en ce que** le nez d'arrêt (3) est constitué par une configuration périphérique de la paroi du collet (1.3) pratiquement en forme de U en coupe longitudinale axiale et dirigée de manière radiale vers l'extérieur, avec des parois latérales approximativement radiales, et **en ce qu'**une rainure annulaire périphérique au moins, axialement étroite (4, 5, 6), moulée de manière plus ou moins radiale depuis l'extérieur vers l'intérieur dans la paroi du collet (1.3) est disposée parallèlement audit nez et à proximité immédiate.

2. Soufflet selon la revendication 1, **caractérisé en ce que** la profondeur radiale (T) de la (des) rainure (s) annulaire (s) (4, 5, 6) est plus grande que sa largeur axiale (B).

3. Soufflet selon la revendication 2, **caractérisé en ce que** la profondeur radiale (T) de la (des) rainure (s) annulaire (s) (4, 5, 6) est au moins deux fois plus grande que sa largeur axiale (B).

4. Soufflet selon l'une des revendications 1 à 3, **caractérisé en ce que** la profondeur radiale (T) de la (des) rainure (s) annulaire (s) (4, 5, 6) est au moins identique à l'épaisseur (W) de la paroi du collet (1.3).

5. Soufflet selon l'une des revendications 1 à 4, **caractérisé en ce qu'**une rainure annulaire (4) périphérique est disposée sur le côté du nez d'arrêt (3) se trouvant en face de l'extrémité libre (1.2) du collet de fixation (1.1), de telle sorte que sa paroi latérale (4.1) opposée à l'extrémité libre du collet (1.2) coïncide avec la paroi latérale (3.1) du nez d'arrêt (3) se trouvant en face de l'extrémité libre du collet (1.2).

6. Soufflet selon l'une des revendications 1 à 5, **caractérisé en ce que** le collet de fixation (1.1) s'amincit de manière radiale entre la rainure annulaire (4) périphérique et l'extrémité libre du collet (1.2), pour constituer une rampe coulissante (1.4) en forme d'aire latérale de cône.

7. Soufflet selon l'une des revendications 1 à 6, **caractérisé en ce qu'**une rainure annulaire (5) périphérique est disposée sur le côté du nez d'arrêt (3) opposé à l'extrémité libre (1.2) du collet de fixation (1.1), de telle sorte que ladite rainure annulaire s'étend de manière radiale vers l'intérieur, depuis l'embase (3.2) du nez d'arrêt (3).

8. Soufflet selon l'une des revendications 1 à 7, **caractérisé en ce que** le contour extérieur du collet de fixation (1.1) au niveau de l'embase (3.2) du nez d'arrêt (3) correspond au contour intérieur du bord d'arrêt (2.2) du raccord (2).

9. Raccord avec un soufflet à emboîter dans ce dernier selon l'une des revendications 1 à 8, **caractérisé en ce que** le diamètre extérieur (D₁) du nez d'arrêt (3) est un peu plus grand que le diamètre intérieur (D₂) du dégagement (2.1) du raccord (2).
